(19) **Europäisches Patentamt / European Patent Office / Office européen des brevets**

(11) **EP 3 283 601 B1**

(12) **FASCICULE DE BREVET EUROPEEN**

(45) Date de publication et mention
de la délivrance du brevet:
**10.04.2019  Bulletin 2019/15**

(51) Int Cl.:
*C10G 45/08* (2006.01)  *C10G 45/38* (2006.01)
*C10L 1/06* (2006.01)  *B01J 23/883* (2006.01)
*B01J 35/10* (2006.01)  *B01J 37/20* (2006.01)
*C10G 65/06* (2006.01)  *C10G 67/02* (2006.01)
*B01J 23/888* (2006.01)  *B01J 23/882* (2006.01)
*B01J 23/881* (2006.01)

(21) Numéro de dépôt: **16704661.4**

(22) Date de dépôt: **17.02.2016**

(86) Numéro de dépôt international:
**PCT/EP2016/053303**

(87) Numéro de publication internationale:
**WO 2016/165853 (20.10.2016 Gazette 2016/42)**

(54) **PROCEDE D'ADOUCISSEMENT EN COMPOSES DU TYPE SULFURE D'UNE ESSENCE OLEFINIQUE**

VERFAHREN ZUM SÜSSEN EINES OLEFINISCHEN BENZINS VON SULPHIDVERBINDUNGEN

METHOD FOR SWEETENING AN OLEFINIC PETROL OF SULPHIDE-TYPE COMPOUNDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **15.04.2015  FR 1553340**

(43) Date de publication de la demande:
**21.02.2018  Bulletin 2018/08**

(73) Titulaire: **IFP Energies nouvelles
92500 Rueil-Malmaison (FR)**

(72) Inventeurs:
• **LEFLAIVE, Philibert
69780 Mions (FR)**
• **LOPEZ GARCIA, Clémentina
69008 Lyon (FR)**
• **GORNAY, Julien
69520 Grigny (FR)**
• **PUCCI, Annick
78290 Croissy sur Seine (FR)**
• **ASTERIS, Diamantis
78400 Chatou (FR)**
• **GODARD-PITHON, Marie
92500 Rueil Malmaison (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A1- 2 816 094          FR-A- 918 705
FR-A1- 2 104 631         FR-A1- 2 888 583
FR-A1- 2 988 732         FR-A1- 2 993 571
US-A1- 2003 230 516    US-A1- 2004 000 506
US-A1- 2012 043 260**

## Description

La présente invention concerne un procédé pour réduire la teneur en composés du type sulfure de formule R1-S-R2, avec R1 et R2 choisis parmi le méthyl et l'éthyl, contenue dans une essence. En particulier le procédé s'applique pour des essences dites oléfiniques.

Le procédé selon l'invention peut être intégré comme étape de prétraitement dans un procédé d'hydrodésulfuration d'une essence afin de limiter la teneur en composés soufrés légers du type sulfure.

## Etat de la technique

La production d'essences répondant aux nouvelles normes d'environnement nécessite que l'on diminue de façon importante leur teneur en soufre à des valeurs n'excédant généralement pas 50 ppm, et préférentiellement inférieures à 10 ppm poids.

Il est par ailleurs connu que les essences de conversion, et plus particulièrement celles provenant du craquage catalytique, qui peuvent représenter 30 à 50 % du pool essence, présentent des teneurs élevées en oléfines et en soufre.

Le soufre présent dans les essences est pour cette raison imputable, à près de 90 %, aux essences issues des procédés de craquage catalytique, qu'on appellera dans la suite essence de FCC (Fluid Catalytic Cracking selon la terminologie anglo-saxonne, que l'on peut traduire par craquage catalytique en lit fluidisé). Les essences de FCC constituent donc la charge préférée du procédé de la présente invention.

Parmi les voies possibles pour produire des carburants à faible teneur en soufre, celle qui a été très largement retenue consiste à traiter spécifiquement les bases essences riches en soufre par des procédés d'hydrodésulfuration en présence d'hydrogène et d'un catalyseur. Les procédés traditionnels désulfurent les essences de manière non sélective en hydrogénant une grande partie des mono-oléfines, ce qui engendre une forte perte en indice d'octane et une forte consommation d'hydrogène. Les procédés les plus récents, tels que le procédé Prime G+ (marque commerciale), permettent de désulfurer les essences de craquage riches en oléfines, tout en limitant l'hydrogénation des mono-oléfines et par conséquent la perte d'octane et la forte consommation d'hydrogène qui en résulte. De tels procédés sont par exemples décrits dans les demandes de brevet EP 1077247 et EP 1174485.

Comme décrit dans les demandes de brevet EP 1077247 et EP 1 800 748, il est avantageux de réaliser avant l'étape d'hydrotraitement une étape d'hydrogénation sélective de la charge à traiter. Cette première étape d'hydrogénation consiste essentiellement à hydrogéner sélectivement les dioléfines, tout en transformant conjointement par alourdissement les composés soufrés légers saturés (par augmentation de leur poids moléculaire), qui sont des composés soufrés dont le point d'ébullition est inférieur au point d'ébullition du thiophène, tels que le méthanethiol, l'éthanethiol, le propanethiol, le diméthylsulfure et l'éthyl-méthylsulfure. Par fractionnement de l'essence issue de l'étape d'hydrogénation sélective, on produit une coupe essence désulfurée légère (ou LCN pour Light Cracked Naphtha selon la terminologie anglo-saxonne) composée majoritairement de mono-oléfines à 5 ou 6 atomes de carbone sans perte d'octane, qui peut être valorisée au pool essence pour la formulation de carburant pour véhicules.

Dans des conditions opératoires spécifiques, cette hydrogénation réalise sélectivement l'hydrogénation des dioléfines présentes dans la charge à traiter en composés mono-oléfiniques, qui possèdent un meilleur indice d'octane. Un autre effet de l'hydrogénation sélective est de prévenir la désactivation progressive du catalyseur d'hydrodésulfuration sélective et/ou d'éviter un bouchage progressif du réacteur dû à la formation de gommes de polymérisation à la surface des catalyseurs ou dans le réacteur. En effet, les composés polyinsaturés sont instables et ont tendance à former des gommes par polymérisation.

La demande de brevet EP 2161076 divulgue un procédé d'hydrogénation sélective des composés polyinsaturés, et plus particulièrement des dioléfines, permettant de réaliser conjointement l'alourdissement des composés soufrés légers saturés. Ce procédé met en oeuvre un catalyseur contenant au moins un métal du groupe VIb et au moins un métal non noble du groupe VIII déposés sur un support poreux.

Il a été constaté que lorsque la teneur en composés sulfures légers, c'est-à-dire de formule R1-S-R2 avec R1 et R2 choisis parmi le méthyl et l'éthyl, était importante l'étape d'hydrogénation sélective n'était pas assez efficace pour convertir ces composés de sorte qu'après fractionnement on obtient une coupe essence légère LCN contenant une quantité notable de composés sulfures légers. Pour répondre à ce problème, il est tout à fait envisageable de durcir les conditions de température de l'étape d'hydrogénation sélective mais au prix d'une désactivation prématurée du catalyseur et d'un encrassage rapide des internes du réacteur, ces phénomènes étant liés à la formation de coke par polymérisation des dioléfines contenues dans l'essence à traiter. Une autre solution consisterait à diminuer la vitesse volumique horaire de l'essence à traiter dans le réacteur mais qui demanderait de mettre en oeuvre plus de catalyseur et d'accroître la hauteur du réacteur; cependant cette solution n'est pas nécessairement souhaitable du point de vue économique et/ou technique.

FR 2 988 732 divulgue un procédé de traitement d'une essence contenant des dioléfines, des mono-oléfines et du soufre comprenant une étape d'hydrogénation.

Un but de l'invention est donc de proposer un procédé amélioré en termes d'efficacité pour réduire la teneur en composés du type sulfure légers d'une essence (ou un mélange d'essences) et qui puisse être opéré pendant des temps cycle allongés avant le remplacement du catalyseur et/ou le nettoyage de l'installation dans laquelle est réalisé le procédé.

**Résumé de l'invention**

La présente invention concerne un procédé pour réduire la teneur en composés du type sulfure de formule R1-S-R2, avec R1 et R2 choisis parmi les radicaux méthyl (CH3) et éthyl (C2H5), d'une essence contenant des dioléfines, des mono-oléfines et du soufre, dans lequel:

A) on met en contact dans un réacteur, l'essence en mélange avec une coupe essence légère recyclée de l'étape C) et de l'hydrogène et avec un catalyseur A comprenant au moins un métal du groupe VIb et au moins un métal non noble du groupe VIII déposés sur un support, l'étape A) étant réalisée à une température dans le réacteur comprise entre 60°C et 150°C avec une vitesse volumique horaire (VVH) comprise entre 1 $h^{-1}$ et 10 $h^{-1}$, une pression comprise entre 0,5 et 5 MPa et avec un rapport volumique ($H_2$ ajouté/mélange d'essences) compris entre 1 à 40 normaux litres d'hydrogène par litre du mélange d'essences (vol/vol), de manière à produire un effluent ayant une teneur en dioléfines et une teneur en composés du type sulfure de formule R1-S-R2, avec R1 et R2 choisis parmi les radicaux méthyl ($CH_3$) et éthyl ($C_2H_5$) plus faibles que celle de l'essence de départ;

B) on envoie ledit effluent issu de l'étape A) dans une colonne de fractionnement afin de séparer en tête une coupe d'essence légère contenant des hydrocarbures ayant moins de 6 atomes de carbone par molécule et en fond de la colonne une coupe essence lourde contenant des hydrocarbures ayant 6 et plus de 6 atomes de carbone par molécule;

C) on recycle une partie de la coupe essence légère issue de l'étape B) dans le réacteur de l'étape A) avec un taux de recyclage compris entre 0,1 et 0,7. Le taux de recyclage est défini comme étant le ratio de la quantité de coupe essence légère recyclée sur la quantité totale d'essence légère soutirée en tête de la colonne de fractionnement.

La demanderesse a constaté que le recyclage de la coupe essence légère dans le réacteur de l'étape A) permet non seulement de favoriser la conversion des composés du type sulfures légers en conservant autant que possible l'indice d'octane de l'essence, tout en limitant la désactivation du catalyseur et l'encrassage des réacteurs par la formation de dépôts de coke respectivement sur le catalyseur et sur les internes de réacteur.

Dans le contexte de l'invention, le terme "réduire la teneur en composés de type sulfure légers" désigne le fait que la teneur en composés de type sulfure léger qui sont présents dans l'effluent réactionnel obtenu après l'étape A) est plus faible que celle de l'essence qui est traitée.

Un avantage du procédé est lié au fait qu'il est possible d'améliorer le rendement de la conversion des composés de type sulfure légers sans avoir besoin de durcir les conditions de température de ladite étape A) avec pour conséquence une désactivation prématurée du catalyseur et d'un encrassage rapide des internes du réacteur, ni d'augmenter la taille du réacteur.

De préférence la coupe essence lourde récupérée en fond de la colonne de fractionnement est traitée dans une unité d'hydrodésulfuration en présence d'hydrogène.

Le catalyseur A est utilisé sous sa forme sulfurée. Le taux de sulfuration des métaux constituants le catalyseur est au moins égal à 60%,

Le catalyseur A comprend:

- une teneur en oxyde du métal du groupe VIb comprise entre 4 et 20% poids par rapport au poids total du catalyseur,
- une teneur en oxyde du métal du groupe VIII compris entre 4 à 15% poids par rapport au poids total du catalyseur,
- un taux de sulfuration des métaux constituants ledit catalyseur au moins égal à 60%,
- un rapport molaire entre le métal non noble du groupe VIII et le métal du groupe VIb compris entre 0,6 et 8 mol/mol,
- une surface spécifique du catalyseur comprise entre 30 et 300 $m^2$/g.

De préférence, le catalyseur A présente une densité en métal du groupe VIb par unité de surface du catalyseur inférieure ou égale à $10^{-3}$ gramme d'oxydes du métal du groupe VIb par $m^2$ de catalyseur.

De préférence le métal du groupe VIb du catalyseur A est choisi parmi le molybdène et le tungstène, de préférence le molybdène.

De préférence le métal du groupe VIII du catalyseur A est choisi parmi le nickel, le cobalt et le fer, de préférence le nickel.

Dans un mode de réalisation préféré, le métal du groupe VIII est le nickel et le métal du groupe VIb est le molybdène.

Le procédé selon l'invention est particulièrement adapté pour traiter une essence issue du craquage catalytique ou du craquage thermique, d'un procédé de cokéfaction, d'un procédé de viscoréduction ou d'un procédé de pyrolyse.

**Description détaillée de l'invention**

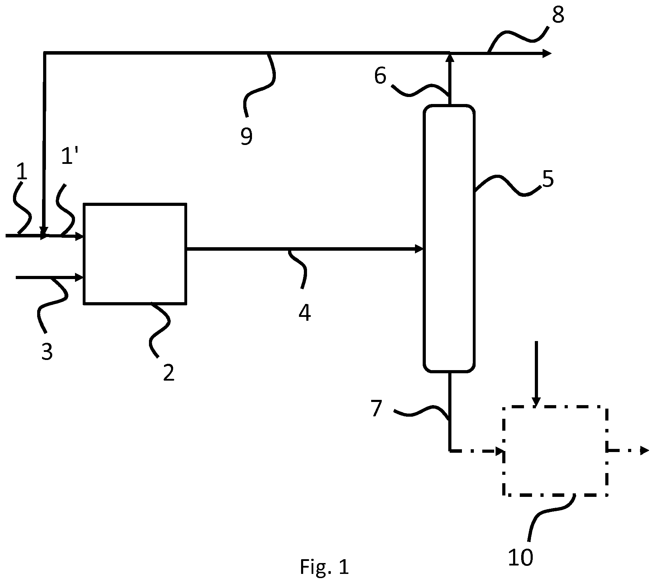

Les autres caractéristiques et avantages de l'invention vont apparaître à la lecture de la description qui va suivre, donnée à titre uniquement illustratif et non limitatif, et en référence à la figure 1 qui est un schéma de principe du procédé selon l'invention.

La charge d'hydrocarbures qui est susceptible d'être traitée par le procédé selon l'invention est une essence du type oléfiniques contenant des dioléfines, des mono-oléfines, et des composés soufrés sous forme notamment de mercaptans et de sulfures légers. Dans le cadre de l'invention, on désigne par le terme "composés du type sulfure légers" des composés de formule R1-S-R2 où R1 et R2 sont choisis parmi les radicaux méthyl ($CH_3$) et éthyl ($C_2H_5$). Ainsi le sulfure le plus léger présent dans l'essence oléfinique est le diméthylsulfure.

La présente invention trouve son application pour traiter des essences issues de procédés de conversion, et en particulier des essences (seules ou en mélange) en provenance du craquage catalytique ou de craquage thermique, d'un procédé de cokéfaction, d'un procédé de viscoréduction, ou d'un procédé de pyrolyse.

Les charges d'hydrocarbures pour lesquelles s'applique l'invention ont une température d'ébullition généralement comprise entre 0°C et 280°C, de préférence comprise entre 15°C et 250°C.

L'essence traitée par le procédé selon l'invention contient généralement entre 0,5% et 5% poids de dioléfines, entre 20% et 55% poids de mono-oléfines, entre 10 ppm et 1% poids de soufre et dans laquelle la teneur en composés sulfures légers de formule R1-S-R2 où R1 et R2 sont choisis parmi les radicaux méthyl ($CH_3$) et éthyl ($C_2H_5$) est généralement comprise entre 1 et 150 ppm poids de soufre.

De préférence l'essence qui est susceptible d'être traitée provient d'une unité de craquage catalytique en lit fluidisé (Fluid Catalytic Cracking selon la terminologie anglo-saxonne). Un mélange d'essences en provenance d'une unité de craquage catalytique en lit fluidisé avec une ou plusieurs essences issues d'un autre procédé de conversion peut aussi être traité. En référence à la figure 1, une charge d'hydrocarbures du type essence est traitée en mélange avec une coupe essence légère de recyclage dans une première étape catalytique. Ainsi la charge essence apportée par la ligne 1 et le flux de recyclage issu de la ligne 9 sont envoyés par la ligne 1' dans un réacteur 2 et dans lequel le mélange est mis en contact avec de l'hydrogène (apporté par la ligne 3) et un catalyseur A qui permet notamment d'hydrogéner sélectivement les dioléfines en oléfines. Le réacteur 2 peut être un réacteur à lit catalytique fixe ou mobile, de préférence fixe. Le réacteur peut comprendre un ou plusieurs lits catalytiques.

La quantité d'hydrogène injectée est telle que le rapport volumique ($H_2$ ajouté/mélange d'essences) soit compris entre 1 à 40 normaux litres d'hydrogène par litre du mélange d'essences (vol/vol), et de préférence compris entre 1 et 5 normaux litres d'hydrogène par litre du mélange d'essence (vol/vol). Un trop large excès d'hydrogène peut entraîner une forte hydrogénation des mono-oléfines et par voie de conséquence, une diminution de l'indice d'octane de l'essence. La totalité de la charge est généralement injectée à l'entrée du réacteur. Toutefois, il peut être avantageux, dans certains cas d'injecter une partie ou la totalité de la charge entre deux lits catalytiques consécutifs placés dans le réacteur. Ce mode de réalisation permet notamment de continuer à opérer le réacteur si l'entrée du réacteur ou le premier lit catalytique se trouvent bouchées par des dépôts de polymères, de particules, ou de gommes présentes dans la charge.

Le mélange d'essences et l'hydrogène sont mis en contact avec le catalyseur A à une température comprise entre 60°C et 150°C et de préférence comprise entre 80 et 130°C, avec une vitesse volumique horaire (VVH ou liquid hourly space velocity LHSV selon la terminologie anglo-saxonne) comprise entre 1 $h^{-1}$ et 10 $h^{-1}$, l'unité de la vitesse volumique horaire étant exprimée en litre du mélange d'essences par heure par litre de catalyseur (L/h/L, soit $h^{-1}$). La pression est ajustée afin que le mélange réactionnel soit majoritairement sous forme liquide dans le réacteur. La pression est comprise entre 0,5 MPa et 5 MPa et de préférence comprise entre 1 et 4 MPa.

Comme indiqué sur la figure 1, un effluent réactionnel est soutiré du réacteur 2 par la ligne 4. Cet effluent a une teneur en dioléfines moindre par rapport à l'essence à traiter du fait de la réaction d'hydrogénation sélective qu'elle a subie. L'effluent issu du réacteur 2 d'hydrogénation a une température proche de la température moyenne du réacteur 2 et généralement supérieure (typiquement de 1 à 3°C) à celle de la charge en entrée du réacteur 2 étant donné que la réaction d'hydrogénation sélective des dioléfines est exothermique.

Il a été observé que l'effluent obtenu après l'étape A) présente également une teneur moindre en composés du type sulfure légers. Ces composés n'ont cependant pas subi une réaction d'hydrodésulfuration (HDS) l'effluent obtenu après l'étape A) ne contenant pas d'$H_2S$. Sans être lié à une quelconque théorie, le catalyseur utilisé à l'étape A) permet de faire réagir les composés sulfures légers décrits ci-dessus avec les oléfines de la charge afin de former des composés sulfures de poids moléculaire plus élevé qui sont susceptibles d'être séparés de l'effluent par distillation. Il est à noter que cette étape catalytique se différencie d'une étape catalytique d'hydrodésulfuration (ou HDS) dans laquelle les composés soufrés sont convertis en $H_2S$ et en hydrocarbures par contact avec un catalyseur ayant des propriétés hydrogénolysantes. L'hydrodésulfuration est généralement opérée à une température comprise entre 200 et 400°C, avec un rapport volumique $H_2$ ajouté/charge essence compris entre 100 à 600 normaux litres d'hydrogène par litre d'essence (vol/vol), à une pression totale comprise entre 1 MPa et 3 MPa et avec une vitesse volumique horaire (VVH) comprise entre 1 $h^{-1}$ et 10 $h^{-1}$.

Le catalyseur A mis en oeuvre dans le procédé selon l'invention comprend au moins un métal du groupe VIb (groupe 6 selon la nouvelle notation de la classification périodique des éléments : Handbook of Chemistry and Physics, 76ième édition, 1995-1996) et au moins un métal non noble du groupe VIII (groupes 8, 9 et 10 selon la nouvelle notation de la classification périodique des éléments : Handbook of Chemistry and Physics, 76ième édition, 1995-1996) déposés sur un support.

Le catalyseur A est utilisé sous forme sulfurée. Le taux de sulfuration du catalyseur A est d'au moins 60%.

La sulfuration du catalyseur peut être réalisée en milieu sulforéducteur, c'est-à-dire en présence d'$H_2$S et d'hydrogène, afin de transformer les oxydes métalliques en sulfures tels que par exemple, le $MoS_2$ et le $Ni_3S_2$. La sulfuration est par exemple réalisée en injectant sur le catalyseur un flux contenant de l'$H_2$S et de l'hydrogène, ou bien un composé soufré susceptible de se décomposer en $H_2$S en présence du catalyseur et de l'hydrogène. Les polysulfures tel que le diméthyldisulfure sont des précurseurs d'$H_2$S couramment utilisés pour sulfurer les catalyseurs. La température est ajustée afin que l'$H_2$S réagisse avec les oxydes métalliques pour former des sulfures métalliques. Cette sulfuration peut être réalisée in situ ou ex situ (en dedans ou dehors) du réacteur de l'étape A) à des températures comprises entre 200 et 600°C, et plus préférentiellement entre 300 et 500°C.

Un élément est considéré comme substantiellement sulfuré lorsque le rapport molaire entre le soufre (S) présent sur le catalyseur et ledit élément est de préférence d'au moins égal à 60% du rapport molaire théorique correspondant à la sulfuration totale de l'élément considéré:

$$(S/\text{élément})_{\text{catalyseur}} \geq 0,6 \times (S/\text{élément})_{\text{théorique}}$$

avec:

$(S/\text{élément})_{\text{catalyseur}}$ = rapport molaire entre le soufre (S) et l'élément présents sur le catalyseur
$(S/\text{élément})_{\text{théorique}}$ = rapport molaire entre le soufre et l'élément correspondant à la sulfuration totale de l'élément en sulfure.

Ce rapport molaire théorique varie selon l'élément considéré:

- $(S/Fe)_{\text{théorique}}$ = 1
- $(S/Co)_{\text{théorique}}$ = 8/9
- $(S/Ni)_{\text{théorique}}$ = 2/3
- $(S/Mo)_{\text{théorique}}$ = 2/1
- $(S/W)_{\text{théorique}}$ = 2/1

Lorsque le catalyseur comprend plusieurs métaux, le rapport molaire entre le S présent sur le catalyseur et l'ensemble des éléments est de préférence au moins égal à 60% du rapport molaire théorique correspondant à la sulfuration totale de chaque élément en sulfure, le calcul étant effectué au prorata des fractions molaires relatives de chaque élément.

Par exemple, pour un catalyseur comprenant du molybdène et du nickel avec une fraction molaire respective de 0,7 et 0,3, le rapport molaire minimal (S/ Mo + Ni) est donné par la relation:

$$(S/\text{Mo+Ni})_{\text{catalyseur}} = 0,6 \times \{(0,7 \times 2) + (0,3 \times (2/3)\}$$

De façon très préférée, le taux de sulfuration des métaux sera supérieur à 80%.

De préférence la sulfuration est mise en oeuvre sur les métaux sous forme d'oxyde sans que soit réalisée une étape préalable de réduction des métaux. En effet, il est connu que la sulfuration de métaux réduits est plus difficile que la sulfuration de métaux sous forme d'oxydes.

Le catalyseur A selon l'invention comprend les caractéristiques suivantes:

- une teneur en oxyde du métal du groupe VIb est comprise entre 4 et 20% poids par rapport au poids total du catalyseur,
- une teneur en oxyde du métal du groupe VIII est comprise entre 4 à 15% poids par rapport au poids total du catalyseur,
- un taux de sulfuration des métaux constituants ledit catalyseur est au moins égal à 60%,

- un rapport molaire entre le métal non noble du groupe VIII et le métal du groupe VIb est compris entre 0,6 et 8 mol/mol,
- une surface spécifique du catalyseur est comprise entre 30 et 300 m$^2$/g.

Le catalyseur A a de préférence une teneur en poids de l'élément du groupe VIb sous forme oxyde comprise entre 6 et 18%, de préférence comprise entre 8 et 12% et manière encore préférée comprise entre 10 et 12% en poids par rapport au poids de catalyseur. Le métal du groupe VIb est de préférence choisi parmi le molybdène et le tungstène. De manière plus préférée, le métal du groupe VIb est le molybdène.

Le catalyseur A contient également un métal du groupe VIII choisi de préférence parmi le nickel, le cobalt et le fer. De manière plus préférée, le métal du groupe VIII est le nickel. La teneur en métal du groupe VIII exprimée sous forme d'oxyde est comprise entre 4 et 12% poids et de préférence comprise entre 6 et 10% poids et de manière encore préférée entre 6 et 8% poids par rapport au poids de catalyseur.

Le rapport molaire entre le métal non noble du groupe VIII et le métal du groupe VIb est compris entre 0,6 et 8 mol/mol et de manière préférée compris entre 1 et 3 mol/mol.

La densité de métal du groupe VIb, exprimée comme étant le rapport entre ladite teneur en poids d'oxyde du métal du groupe VIb et la surface spécifique du catalyseur, est inférieure ou égale 10$^{-3}$ g/m$^2$, de préférence comprise entre 10$^{-4}$ et 10$^{-3}$ g/m$^2$. De manière préférée la densité de métal du groupe VIb est comprise entre 4 et 6.10$^4$ g/m$^2$. Ainsi par exemple dans le cas de figure où le catalyseur comprend 1 1% poids d'oxyde de molybdène par rapport au poids de catalyseur et présente une surface spécifique de 219 m$^2$/g alors la densité de molybdène, exprimée comme étant le rapport entre la teneur en poids d'oxyde de molybdène (MoO$_3$) et la surface spécifique du catalyseur, est égale à (0,11 / 219) soit 5.10$^{-4}$ g/m$^2$.

La surface spécifique du catalyseur A est de préférence comprise entre 100 et 300 m$^2$/g et de manière plus préférée comprise entre 150 et 250 m$^2$/g. La surface spécifique est déterminée selon la norme ASTM D3663.

De préférence, le catalyseur A présente un volume poreux total mesuré par porosimétrie au mercure supérieur à 0,3 cm$^3$/g, de préférence compris entre 0,4 et 1,4 cm$^3$/g et préférentiellement compris entre 0,5 et 1,3 cm$^3$/g. La porosimétrie au mercure est mesurée selon la norme ASTM D4284-92 avec un angle de mouillage de 140°, avec un appareil modèle Autopore III de la marque Microméritics.

Le support du catalyseur A est de préférence choisi parmi l'alumine, l'aluminate de nickel, la silice, le carbure de silicium, ou leur mélange. On utilise de manière préférée de l'alumine. Selon une variante, le support du catalyseur A est constitué d'alumine gamma cubique ou de l'alumine delta.

Selon une variante particulièrement préférée, le catalyseur A est un catalyseur NiMo sur alumine.

Le catalyseur A selon l'invention peut être préparé au moyen de toute technique connue de l'homme du métier, et notamment par imprégnation des éléments des groupes VIII et VIb sur le support sélectionné. Cette imprégnation peut par exemple être réalisée selon le mode connu de l'homme du métier sous la terminologie d'imprégnation à sec, dans lequel on introduit juste la quantité d'éléments désirés sous forme de sels solubles dans le solvant choisi, par exemple de l'eau déminéralisée, de façon à remplir aussi exactement que possible la porosité du support.

Après introduction des métaux des groupes VIII et VIb, et éventuellement une mise en forme du catalyseur, celui-ci subi un traitement d'activation. Ce traitement a généralement pour but de transformer les précurseurs moléculaires des éléments en phase oxyde. Il s'agit dans ce cas d'un traitement oxydant mais un simple séchage du catalyseur peut également être effectué. Dans le cas d'un traitement oxydant, également appelé calcination, celui-ci est généralement mis en oeuvre sous air ou sous oxygène dilué, et la température de traitement est généralement comprise entre 200°C et 550°C, de préférence entre 300°C et 500°C.

Après calcination, les métaux déposés sur le support se trouvent sous forme d'oxyde. Dans le cas du nickel et du molybdène, les métaux se trouvent principalement sous forme de MoO$_3$ et de NiO. De préférence, le catalyseur A est utilisé sous forme sulfurée c'est-à-dire qu'il a subi une étape d'activation de sulfuration après le traitement oxydant.

Selon l'invention, l'effluent issu du réacteur 2 est soutiré dudit réacteur et envoyé par la ligne 4 dans une colonne de fractionnement dédiée 5 afin de fournir au moins une coupe d'essence légère 6 (ou LCN pour Light Cracked Naphtha selon la terminologie anglo-saxonne) qui est soutirée en tête de la colonne 5 et une coupe d'essence lourde 7 (HCN pour Heavy Cracked Naphtha selon la terminologie anglo-saxonne) qui est récupérée en fond de la colonne 5. Il est à noter que cette étape de fractionnement est réalisée subséquemment à l'étape catalytique A) dans une colonne dédiée uniquement à la séparation contrairement à une mise en oeuvre dans une colonne de distillation catalytique où la réaction catalytique et la séparation sont effectuées de façon concomitante.

Le point de coupe de la colonne de fractionnement est choisi de sorte que la coupe d'essence légère contient des hydrocarbures (essentiellement des oléfines) ayant moins de six atomes de carbone et une teneur faible en composés du type sulfure légers et que la coupe d'essence lourde présente une quantité importante des composés soufrés tels que les mercaptans, les composés de la famille du thiophène et les sulfures et des hydrocarbures (essentiellement des oléfines) ayant six ou plus de six atomes de carbone ("C6+"). Typiquement, le point de coupe est réglé de telle sorte que la coupe d'essence légère ait une température d'ébullition comprise entre -5°C et 70°C, de préférence comprise entre -5°C et 65°C. Quant à la coupe d'essence lourde elle peut avoir une température d'ébullition comprise entre 60°C et 280°C, de préférence comprise entre 65°C et 280°C. L'homme dans l'art sait que les séparations d'hydrocarbures sont imparfaites et, par conséquent, un certain chevauchement dans les points ébullition des coupes légère et lourde peut se produire près du point de coupe. Typiquement, la coupe d'essence légère a une teneur en soufre total inférieure à 15 ppm, de préférence inférieure à 10 ppm poids et une teneur en sulfures légers inférieure à 10 ppm poids de soufre.

Selon l'invention, la coupe d'essence légère 6 ainsi produite par le fractionnement, qui est riche en oléfines (donc à haut indice d'octane) et appauvrie en composés soufrés, dont les sulfures légers, est divisée en deux flux 8 et 9, après éventuellement élimination de l'hydrogène et stabilisation. Comme indiqué dans la figure 1, le flux 8 est envoyé au pool essence pour la formulation de carburant de type essence. Cette coupe essence légère pauvre en soufre ne nécessite généralement pas de traitement supplémentaire d'hydrodésulfuration.

Quant au flux 9 complémentaire, conformément à l'invention, il est recyclé dans le réacteur 2. Le taux recyclage de la coupe essence légère appauvrie en soufre est défini comme étant le ratio du flux 9 sur le flux 6 est compris entre 0,1 et 0,7 et de manière préférée compris entre 0,3 et 0,6.

La coupe d'essence lourde 7 qui contient la majorité des composés organo-soufrés dont les sulfures, est avantageusement traitée dans une unité d'hydrodésulfuration (HDS) comportant un réacteur 10 équipé d'un lit de catalyseur ayant des propriétés hydrogénolysantes. Le catalyseur d'HDS peut comprendre au moins un métal du groupe VIb, par exemple du molybdène, et au moins un métal du groupe VIII, par exemple du cobalt, déposés sur un support. On pourra notamment se référer aux documents EP 1 369 466 et EP 1 892 039 de la demanderesse qui décrivent des catalyseurs d'HDS.

Les conditions opératoires permettant une hydrodésulfuration en présence d'hydrogène de la coupe essence lourde sont :

- une température comprise entre environ 200 et environ 400°C, préférentiellement comprise entre 250 et 350°C;
- une pression totale comprise entre 1 MPa et 3 MPa, préférentiellement comprise entre 1 MPa et environ 2,5 MPa;
- un rapport volumique $H_2$ ajouté/charge essence compris entre 100 à 600 normaux litres d'hydrogène par litre d'essence (vol/vol); et
- une vitesse volumique horaire (VVH) comprise entre 1 $h^{-1}$ et 10 $h^{-1}$, préférentiellement comprise entre 2 $h^{-1}$ et 8 $h^{-1}$.

La coupe d'essence lourde désulfurée, après élimination de l'$H_2S$ formé par la réaction catalytique d'hydrodésulfuration et stabilisation, peut être alors envoyée au pool essence et/ou au pool diesel en fonction des besoins du raffineur.

Le procédé selon l'invention peut être ainsi intégré à une unité d'hydrodésulfuration comme étape de prétraitement de l'essence avant l'étape d'hydrodésulfuration proprement dite.

## Exemples

### Exemple 1 (comparatif)

Le Tableau 1 présente les caractéristiques générales d'une essence qui a été traitée selon l'invention. La MAV est l'indice d'anhydride maléique (Maleic Anhydrid Value selon terminologie anglo-saxonne) et donne une indication de la teneur en dioléfines conjuguées (composés précurseurs de gommes) dans les essences.

Tableau 1 : Caractéristiques de l'essence

| Composition de l'essence | Unité | Valeur |
|---|---|---|
| Masse volumique à 15°C | g/cm³ | 0.718 |
| MAV | g/100g | 15 |
| Teneur en soufre élémentaire | %m/m | 0.192 |
| Teneur en sulfures légers | | |
| *Diméthyl sulfure* | ppm S | 1.8 |
| *Méthyl-éthyl-sulfure* | ppm S | 4.5 |
| Teneur en oléfines | % m/m | 49.0 |
| Distillation simulée | | |
| *T 5%* | °C | 23 |
| *T 95%* | °C | 179 |

(suite)

| Distillation simulée | | |
|---|---|---|
| RON de l'essence | - | 87.2 |
| MON de l'essence | - | 76.6 |

L'essence est traitée en présence d'un catalyseur A dans un réacteur d'hydrogénation sélective.

Le catalyseur A est un catalyseur de type NiMo sur alumine gamma. Les teneurs en métaux sont respectivement 7% poids NiO et 1 1% poids $MoO_3$ par rapport au poids total du catalyseur, soit un rapport molaire Ni/Mo de 1,2. La surface spécifique du catalyseur est de 230 $m^2$/g. Préalablement à son utilisation, le catalyseur A est sulfuré à pression atmosphérique en banc de sulfuration sous mélange $H_2S/H_2$ constitué de 15% volumique d'$H_2S$ à 1 L/g.h de catalyseur et à 400°C durant deux heures. Ce protocole permet d'obtenir un taux de sulfuration supérieur à 80%.

Le tableau 2 regroupe les conditions opératoires mises en oeuvre ainsi que les résultats de conversion des sulfures légers lors de l'étape d'hydrogénation sélective.

Tableau 2

| Exemple | VVH | H$_2$ ajouté / HC | Température | Pression | MAV résiduelle | Diméthyl-sulfure | | Méthyl-éthyl-sulfure | |
|---|---|---|---|---|---|---|---|---|---|
| | | | | | | Teneur | Conversion | Teneur | Conversion |
| | h$^{-1}$ | NL/L | °C | MPa | mg/100g | ppm poids S | % | ppm poids S | % |
| 1 | 1,5 | 5 | 140 | 2,5 | 0,6 | 0,9 | 50% | 3,0 | 33% |

L'effluent de l'étape d'hydrogénation sélective est envoyé dans une colonne de fractionnement afin de séparer en tête une coupe d'essence légère contenant des hydrocarbures ayant moins de 6 atomes de carbone par molécule et en fond de la colonne une coupe essence lourde contenant des hydrocarbures ayant 6 et plus de 6 atomes de carbone par molécule.

Les teneurs en diméthyl-sulfure et méthyl-éthyl-sulfure dans la coupe d'essence légère sont respectivement de 4,5 et 6,3 ppm poids, soit une teneur totale en sulfures de 10,8 ppm poids.

**Exemple 2 (selon l'invention)**

L'essence de l'exemple 1 est traitée dans le procédé selon l'invention avec un taux de recyclage de 0,5.

Compte-tenu du recyclage, la charge traitée en présence du catalyseur A dans le réacteur d'hydrogénation sélective a une teneur en diméthyl-sulfure et méthyl-éthyl-sulfure de respectivement de 2,1 et 4,4 ppm poids.

Le catalyseur A est un catalyseur de type NiMo sur alumine gamma. Les teneurs en métaux sont respectivement 7% poids NiO et 1 1% poids $MoO_3$ par rapport au poids total du catalyseur, soit un rapport molaire Ni/Mo de 1,2. La surface spécifique du catalyseur est de 230 $m^2$/g. Préalablement à son utilisation, le catalyseur A est sulfuré à pression atmosphérique en banc de sulfuration sous mélange $H_2S/H_2$ constitué de 15% volumique d'$H_2S$ à 1 L/g.h de catalyseur et à 400°C durant deux heures. Ce protocole permet d'obtenir un taux de sulfuration supérieur à 80%.

Tableau 3

| Exemple | VVH | H$_2$ ajouté / HC | Température | Pression | MAV résiduelle | Diméthyl-sulfure | | Méthyl-éthyl-sulfure | |
|---|---|---|---|---|---|---|---|---|---|
| | | | | | | Teneur | Conversion | Teneur | Conversion |
| | h$^{-1}$ | NL/L | °C | MPa | mg/100g | ppm poids S | % | ppm poids S | % |
| 2 | 1,8 | 5 | 140 | 2,5 | 0,6 | 1,1 | 46% | 3.0 | 31% |

L'effluent de l'étape d'hydrogénation sélective est envoyé dans une colonne de fractionnement afin de séparer en tête une coupe d'essence légère contenant des hydrocarbures ayant moins de 6 atomes de carbone par molécule et en fond de la colonne une coupe essence lourde contenant des hydrocarbures ayant 6 et plus de 6 atomes de carbone par molécule.

Les teneurs en diméthyl-sulfure et méthyl-éthyl-sulfure dans la coupe d'essence légère produite sont respectivement de 3,3 et 3,8 ppm poids, soit une teneur totale en sulfures de 7,1 ppm poids.

**Exemple 3 (selon l'invention)**

L'essence de l'exemple 1 est traitée dans le procédé selon l'invention avec un taux de recyclage de 0,33.

Compte-tenu du recyclage, la charge traitée en présence du catalyseur A dans le réacteur d'hydrogénation sélective a une teneur en diméthyl-sulfure et méthyl-éthyl-sulfure de respectivement de 2,0 et 4,5 ppm poids.

Le catalyseur A est un catalyseur de type NiMo sur alumine gamma. Les teneurs en métaux sont respectivement 7% poids NiO et 11% poids $MoO_3$ par rapport au poids total du catalyseur, soit un rapport molaire Ni/Mo de 1,2. La surface spécifique du catalyseur est de 230 $m^2$/g. Préalablement à son utilisation, le catalyseur A est sulfuré à pression atmosphérique en banc de sulfuration sous mélange $H_2S$/$H_2$ constitué de 15% volumique d'H2S à 1 Ug.h de catalyseur et à 400°C durant deux heures. Ce protocole permet d'obtenir un taux de sulfuration supérieur à 80%.

Tableau 4

| Exemple | VVH | H$_2$ ajouté / HC | Température | Pression | MAV résiduelle | Diméthyl-sulfure | | Méthyl-éthyl-sulfure | |
|---|---|---|---|---|---|---|---|---|---|
| | | | | | | Teneur | Conversion | Teneur | Conversion |
| | h$^{-1}$ | NL/L | °C | MPa | mg/100g | ppm poids S | % | ppm poids S | % |
| 3 | 1,65 | 5 | 140 | 2,5 | 0,6 | 1,0 | 49% | 3,0 | 33% |

L'effluent de l'étape d'hydrogénation sélective est envoyé dans une colonne de fractionnement afin de séparer en tête une coupe d'essence légère contenant des hydrocarbures ayant moins de 6 atomes de carbone par molécule et en fond de la colonne une coupe essence lourde contenant des hydrocarbures ayant 6 et plus de 6 atomes de carbone par molécule.

Les teneurs en diméthyl-sulfure et méthyl-éthyl-sulfure dans la coupe d'essence légère produite sont respectivement de 3,7 et 4,6 ppm poids, soit une teneur totale en sulfures de 8,3 ppm poids.

## Revendications

1. Procédé pour réduire la teneur en composés du type sulfure de formule R1-S-R2, avec R1 et R2 choisis parmi les radicaux méthyl ($CH_3$) et éthyl ($C_2H_5$), d'une essence contenant des dioléfines, des mono-oléfines et du soufre, dans lequel:

   A) on met en contact dans un réacteur, l'essence en mélange avec une coupe essence légère recyclée de l'étape C) et de l'hydrogène et avec un catalyseur A comprenant au moins un métal du groupe VIb et au moins un métal non noble du groupe VIII déposés sur un support, l'étape A) étant réalisée à une température dans le réacteur comprise entre 60°C et 150°C avec une vitesse volumique horaire (VVH) comprise entre 1 $h^{-1}$ et 10 $h^{-1}$, une pression comprise entre 0,5 et 5 MPa et avec un rapport volumique ($H_2$ ajouté/mélange d'essences) compris entre 1 à 40 normaux litres d'hydrogène par litre du mélange d'essences (vol/vol), de manière à produire un effluent ayant une teneur en dioléfines et une teneur en composés du type sulfure de formule R1-S-R2, avec R1 et R2 choisis parmi les radicaux méthyl ($CH_3$) et éthyl ($C_2H_5$) plus faibles que celle de l'essence de départ;
   B) on envoie ledit effluent issu de l'étape A) dans une colonne de fractionnement afin de séparer en tête une coupe d'essence légère contenant des hydrocarbures ayant moins de 6 atomes de carbone par molécule et en fond de la colonne une coupe essence lourde contenant des hydrocarbures ayant 6 et plus de 6 atomes de carbone par molécule;
   C) on recycle une partie de la coupe essence légère issue de l'étape B) dans le réacteur de l'étape A) avec un taux de recyclage compris entre 0,1 et 0,7.

   dans lequel le catalyseur A comprend:

   • une teneur en oxyde du métal du groupe VIb comprise entre 4 et 20% poids par rapport au poids total du catalyseur,
   • une teneur en oxyde du métal du groupe VIII comprise entre 4 à 15% poids par rapport au poids total du catalyseur,
   • un taux de sulfuration des métaux constituants ledit catalyseur au moins égal à 60%,
   • un rapport molaire entre le métal non noble du groupe VIII et le métal du groupe VIb compris entre 0,6 et 8 mol/mol,
   • une surface spécifique du catalyseur comprise entre 30 et 300 $m^2$/g.

2. Procédé selon la revendication 1, dans lequel la coupe essence lourde issue de l'étape B) est traitée dans une unité d'hydrodésulfuration en présence d'hydrogène.

3. Procédé selon l'une des revendications précédentes, dans lequel la densité en métal du groupe VIb par unité de surface du catalyseur est inférieure ou égale à $10^{-3}$ gramme d'oxydes du métal du groupe VIb par $m^2$ de catalyseur.

4. Procédé selon l'une des revendications précédentes dans lequel le métal du groupe VIb du catalyseur A est choisi parmi le molybdène et le tungstène, de préférence le molybdène.

5. Procédé selon l'une des revendications précédentes dans lequel le métal du groupe VIII du catalyseur A est choisi parmi le nickel, le cobalt et le fer, de préférence le nickel.

6. Procédé selon l'une des revendications précédentes dans lequel le métal du groupe VIII du catalyseur A est le nickel et le métal du groupe VIb du catalyseur A est le molybdène.

7. Procédé selon l'une des revendications précédentes, dans lequel l'essence est issue du craquage catalytique ou de craquage thermique, d'un procédé de cokéfaction, d'un procédé de viscoréduction ou d'un procédé de pyrolyse.

**EP 3 283 601 B1**

**Patentansprüche**

**1.** Verfahren zur Reduktion des Gehalts an Verbindungen des Schwefel-Typs mit der Formel R1-S-R2, wobei R1 und R2 ausgewählt werden aus Methylresten ($CH_3$) und Ethylresten ($C_2H_5$), eines Benzins, das Diolefine, Monoolefine und Schwefel enthält, wobei:

A) in einem Reaktor, das Benzin in Mischung mit einer von Schritt C) recyclierten leichten Benzinfraktion und Wasserstoff und mit einem Katalysator A, umfassend mindestens ein Metall der Gruppe VIIb und mindestens ein Nicht-Edelmetall der Gruppe VIII, aufgebracht auf einem Träger, in Kontakt gebracht wird, wobei der Schritt A) bei einer Temperatur in dem Reaktor zwischen 60 °C und 150 °C, mit einer Volumengeschwindigkeit pro Stunde (VVH) zwischen 1 $h^{-1}$ und 10 $h^{-1}$, bei einem Druck zwischen 0,5 und 5 MPa und mit einem Volumenverhältnis (zugesetzter $H_2$/Benzinmischung) zwischen 1 und 40 normalen Litern Wasserstoff pro Liter der Benzinmischung (vol/vol) durchgeführt wird, um einen Abstrom zu erzeugen, der einen Gehalt an Diolefinen und einen Gehalt an Verbindungen des Schwefel-Typs mit der Formel R1-S-R2 aufweist, wobei R1 und R2 ausgewählt werden aus schwächeren Methylresten ($CH_3$) und Ethylresten ($C_2H_5$) als jenes des Ausgangsbenzins;
B) der Abstrom aus Schritt A) in eine Fraktionierungssäule geschickt wird, um am Kopf eine leichte Benzinfraktion, die Kohlenwasserstoffe mit weniger als 6 Kohlenstoffatomen pro Molekül enthält, und am Boden der Säule eine schwere Benzinfraktion, die Kohlenwasserstoffe mit 6 und mehr als 6 Kohlenstoffatomen pro Molekül enthält, zu trennen;
C) ein Teil der leichten Benzinfraktion aus Schritt B) in dem Reaktor von Schritt A) mit einer Recyclingrate zwischen 0,1 und 0,7 recycliert wird,

wobei der Katalysator A umfasst:

• einen Gehalt an Oxid eines Metalls der Gruppe VIb zwischen 4 und 20 Gew.-%, bezogen auf das Gesamtgewicht des Katalysators,
• einen Gehalt an Oxid eines Metalls der Gruppe VIII zwischen 4 und 15 Gew.-%, bezogen auf das Gesamtgewicht des Katalysators,
• eine Sulfurierungsrate der den Katalysator bildenden Metalle von mindestens gleich 60 %,
• ein Molverhältnis zwischen dem Nicht-Edelmetall der Gruppe VIII und dem Metall der Gruppe VIb zwischen 0,6 und 8 mol/mol,
• eine spezifische Oberfläche des Katalysators zwischen 30 und 300 $m^2$/g.

**2.** Verfahren nach Anspruch 1, wobei die schwere Benzinfraktion aus Schritt B) in einer Hydroentschwefelungseinheit in Anwesenheit von Wasserstoff behandelt wird.

**3.** Verfahren nach einem der vorhergehenden Ansprüche, wobei die Dichte des Metalls der Gruppe VIb pro Oberflächeneinheit des Katalysators kleiner oder gleich $10^{-3}$ Gramm Oxide des Metalls der Gruppe VIb pro $m^2$ des Katalysators ist.

**4.** Verfahren nach einem der vorhergehenden Ansprüche, wobei das Metall der Gruppe VIb des Katalysators A ausgewählt wird aus Molybdän und Wolfram, vorzugsweise Molybdän.

**5.** Verfahren nach einem der vorhergehenden Ansprüche, wobei das Metall der Gruppe VIII des Katalysators A ausgewählt wird aus Nickel, Kobalt und Eisen, vorzugsweise Nickel.

**6.** Verfahren nach einem der vorhergehenden Ansprüche, wobei das Metall der Gruppe VIII des Katalysators A Nickel ist, und das Metall der Gruppe VIb des Katalysators A Molybdän ist.

**7.** Verfahren nach einem der vorhergehenden Ansprüche, wobei das Benzin aus einem katalytischen Kracken oder aus einem thermischen Kracken, aus einem Verkokungsverfahren, aus einem Visbreaking-Verfahren oder aus einem Pyrolyseverfahren stammt.

**Claims**

**1.** Process for reducing the content of compounds of the sulphide type of formula R1-S-R2, with R1 and R2 selected from the methyl ($CH_3$) and ethyl ($C_2H_5$) radicals, in a gasoline containing diolefins, mono-olefins and sulphur, in which:

**15**

A) the gasoline in a mixture with a light gasoline cut recycled from step C) and hydrogen are brought into contact in a reactor with catalyst A comprising at least one metal of group VIb and at least one non noble metal of group VIII deposited on a support, step A) being carried out at a temperature in the reactor comprised between 60°C and 150°C with a liquid hourly space velocity (LHSV) comprised between 1 $h^{-1}$ and 10 $h^{-1}$, a pressure comprised between 0.5 and 5 MPa and with a ratio by volume (added $H_2$/mixture of gasolines) comprised between 1 to 40 normal litres of hydrogen per litre of the mixture of gasolines (vol/vol), so as to produce an effluent having a content of diolefins and a content of compounds of the sulphide type of formula R1-S-R2, with R1 and R2 selected from the methyl ($CH_3$) and ethyl ($C_2H_5$) radicals lower than that that of the starting gasoline;

B) said effluent originating from step A) is sent into a fractionating column in order to separate at the top of the column a light gasoline cut containing hydrocarbons having less than 6 carbon atoms per molecule and at the bottom of the column a heavy gasoline cut containing hydrocarbons having 6 and more than 6 carbon atoms per molecule;

C) a part of the light gasoline cut originating from step B) is recycled into the reactor of step A) with a recycle ratio comprised between 0.1 and 0.7,

in which catalyst A comprises:

• a content of oxide of the metal of group VIb comprised between 4 and 20% by weight with respect to the total weight of the catalyst,

• a content of oxide of the metal of group VIII comprised between 4 and 15% by weight with respect to the total weight of the catalyst,

• a degree of sulphurization of the metals constituting said catalyst at least equal to 60%,

• a molar ratio between the non noble metal of group VIII and the metal of group VIb comprised between 0.6 and 8 mol/mol,

• a specific surface area of the catalyst comprised between 30 and 300 $m^2$/g.

2. Process according to claim 1, in which the heavy gasoline cut originating from step B) is treated in a hydrodesulphurization unit in the presence of hydrogen.

3. Process according to one of the preceding claims, in which the density of the metal of group VIb per unit area of the catalyst is less than or equal to $10^{-3}$ gram of oxides of the metal of group VIb per $m^2$ of catalyst.

4. Process according to one of the preceding claims, in which the metal of group VIb of catalyst A is selected from molybdenum and tungsten, preferably molybdenum.

5. Process according to one of the preceding claims, in which the metal of group VIII of catalyst A is selected from nickel, cobalt and iron, preferably nickel.

6. Process according to one of the preceding claims, in which the metal of group VIII of catalyst A is nickel and the metal of group VIb of catalyst A is molybdenum.

7. Process according to one of the preceding claims, in which the gasoline originates from catalytic cracking or thermal cracking, a coking process, a visbreaking process or a pyrolysis process.

Fig. 1

## RÉFÉRENCES CITÉES DANS LA DESCRIPTION

**Documents brevets cités dans la description**

- EP 1077247 A
- EP 1174485 A
- EP 1800748 A
- EP 2161076 A
- FR 2988732
- EP 1369466 A
- EP 1892039 A

**Littérature non-brevet citée dans la description**

- Handbook of Chemistry and Physics. 1995
- Handbook of Chemistry and Physics. 1995